# EUROPÄISCHE PATENTANMELDUNG

(11) **EP 3 809 428 A1**
(43) Veröffentlichungstag der Anmeldung: **21.04.2021**
(21) Anmeldenummer: 19204008.7
(22) Anmeldetag: 18.10.2019
(51) Int. Cl.: H01F 27/04, H01F 27/32, B32B 1/00, H01B 3/00, H01B 9/06

(54) **TRÄGERPLATTE UND BARRIERESYSTEM UMFASSEND MINDESTENS EINE SOLCHE TRÄGERPLATTE**

(71) Anmelder: Weidmann Holding AG, 8640 Rapperswil (CH)
(72) Erfinder: TAKLA, Haleem, 8645 Jona (CH)
(74) Vertreter: Rutz, Andrea

(57) **Zusammenfassung**

Es wird eine Trägerplatte (20, 20') zum Befestigen eines welligen Substrats (30) angegeben, umfassend eine im Wesentlichen rechteckige Grundfläche (21) und Auswölbungen (27). Die Grundfläche (21) ist in mindestens drei Abschnitte (22a, 22b, 22a) unterteilt und die Abschnitte (22a, 22b, 22a) sind durch die Auswölbungen (27) voneinander getrennt. Die Auswölbungen (27) weisen jeweils zwei Seitenwände (29) sowie eine Deckfläche (28) auf. Die Seitenwände (29) weisen gegenüberliegend angeordnete Schlitze (23) zum Durchführen des welligen Substrats (30) auf. Ausserdem wird ein Barrieresystem (40) mit mindestens einer solchen Trägerplatte (20, 20') und einem daran befestigten welligen Substrat (30) angegeben.

## Beschreibung

### TECHNISCHES GEBIET

Die Erfindung betrifft eine Trägerplatte für ein welliges Substrat, insbesondere Wellpappe oder Wellboard, und ein Barrieresystem, insbesondere für Hochspannungsgeräte mit Ölisolation, mit mindestens einer solchen Trägerplatte.

### STAND DER TECHNIK

Ausleitungen und Elektroden in Öltransformatoren sind üblicherweise zur elektrischen Isolation mit einem Barrieresystem umgeben. Das Barrieresystem umfasst dabei Zylinder mit unterschiedlichem Durchmesser, die mittels Lamellenstreifen voneinander beabstandet sind. Sowohl die Zylinder als auch die Lamellenstreifen sind aus einem Zellulosematerial gefertigt. Der Einsatz dieser Lamellenstreifen hat den Nachteil, dass einerseits das Gewicht des Barrieresystems deutlich erhöht wird und zum anderen weisen die Lamellenstreifen andere Feuchtigkeitsabsorptionseigenschaften auf als die Zylinder. Im Allgemeinen absorbieren die Lamellenstreifen Feuchtigkeit stärker in der Höhe, als die Zylinder im Durchmesser. Absorption von Feuchtigkeit tritt insbesondere während einer langen Lagerung unter ungeeigneten klimatischen Bedingungen mit hoher Luftfeuchtigkeit auf. Dadurch kann es zu Verformungen des Zylinders kommen, während die Streifen ihre ursprüngliche Position behalten. Dies hat zur Folge, dass es zu Spannungen im Barrieresystem kommen kann, was zu Schäden an den Ausleitungen und Elektroden führen kann.

EP 2 637 177 B1 beschreibt ein Barrieresystem aus Wellpappe und Glattpapiereinlagen, wobei die Wellpappe Kanäle zur Durchführung von Öl in einem ölisolierten Transformator bildet. EP 2 637 177 offenbart nicht, wie die Fixierung der Wellpappe erfolgt. Ohne eine geeignete Fixierung kann die Wellpappe mit der Zeit durch unterschiedliche Spannungs- und Krafteinwirkungen verrutschen und die Wirkung des Barrieresystems stark beeinträchtigen.

### DARSTELLUNG DER ERFINDUNG

Es ist daher eine Aufgabe der Erfindung, die Nachteile des Stands der Technik zu überwinden. Insbesondere ist es eine Aufgabe der Erfindung eine Trägerplatte bereitzustellen, die eine Wellpappe sicher fixiert, und ein Barrieresystem umfassend eine solche Trägerplatte mit Wellpappe anzugeben.

Die Aufgabe wird zumindest teilweise durch die Gegenstände der unabhängigen Ansprüche gelöst. Weitere Ausführungsformen finden sich in den abhängigen Ansprüchen.

Ein erster Aspekt der Erfindung betrifft eine Trägerplatte zum Befestigen eines welligen Substrats. Die Trägerplatte dient vorzugsweise der Herstellung von Barrieresystemen für Öltransformatoren. Die Trägerplatte umfasst eine im Wesentlichen rechteckige Grundfläche und Auswölbungen. Die Grundfläche ist in mindestens drei Abschnitte unterteilt und die Abschnitte sind durch die Auswölbungen voneinander getrennt. Die beiden äusseren Abschnitte bilden bevorzugt jeweils die Enden der Trägerplatte. Die Auswölbungen weisen jeweils zwei Seitenwände und eine Deckfläche auf. Die Deckfläche erstreckt sich bevorzugt parallel zur Grundfläche. Die Seitenwände weisen gegenüberliegend angeordnete Schlitze zum Durchführen des welligen Substrats auf.

Die beiden Seitenwände einer jeweiligen Auswölbung sind einander in der Regel gegenüberliegend angeordnet und mittels der Deckfläche miteinander verbunden. Die Deckfläche ist somit jeweils zwischen den beiden Seitenwänden einer jeweiligen Auswölbung angeordnet. Die Seitenwände verbinden üblicherweise jeweils die Deckfläche mit einem der Abschnitte. Die Seitenwände sind bevorzugt als Ganzes jeweils flach ausgebildet. Je nachdem, ob die beiden Seitenwände in diesem Fall parallel oder geneigt zueinander stehen, ist der Querschnitt der Auswölbung jeweils rechteckig oder trapezförmig.

Unter Vernachlässigung der Schlitze weisen die Auswölbungen bevorzugt jeweils einen konstanten Querschnitt über ihre gesamte Längserstreckung auf.

Die Auswölbungen können insbesondere mittels Faltung hergestellt sein. Hierzu kann bei der Herstellung der Trägerplatte eine zum Beispiel bandförmig ausgebildete Ausgangsform entlang der jeweiligen Grenzlinien zwischen den Abschnitten und den Seitenwänden sowie zwischen den Seitenwänden und den Deckflächen gefaltet werden. Um die Faltungen zu erleichtern, kann die Ausgangsform an den Grenzlinien jeweils vorgeritzt werden.

Der Übergang von jeweils einer Seitenwand zu einer Deckfläche wird bevorzugt durch jeweils eine Kante gebildet. Die Kanten einer jeweiligen Auswölbung erstrecken sich dabei vorzugsweise parallel zueinander. Bevorzugt sind sowohl die Seitenwände als auch die Deckflächen jeweils als Ganzes flach ausgebildet. Grundsätzlich wäre es aber auch möglich, dass die Seitenwände und die Deckflächen jeweils im Querschnitt gerundet ausgebildet sind und fliessend ineinander übergehen. In diesem Fall kann der Querschnitt der Auswölbungen zum Beispiel die Form eines Halbkreises oder eines Bogens bilden.

Sofern die rechteckige Grundfläche kein Quadrat bildet, sind die Abschnitte vorzugsweise hintereinander entlang der längeren Seitenkanten angeordnet und jeweils parallel zu den kurzen Seitenkanten voneinander durch die Auswölbungen getrennt. Die Auswölbungen erstrecken sich vorzugsweise jeweils entlang einen Teil der Länge der kürzeren Seitenkante oder entlang der gesamten Länge der kürzeren Seitenkante, mindestens jedoch über eine Länge von 50 % der Seitenkante.

Das wellige Substrat kann aus einem flexiblen Material hergestellt sein. Vorzugsweise ist das Substrat aus einem zellulosebasiertem Material, beispielsweise Zellstoff, Holzschliff oder Altpapier, geformt. Dabei kann es sich um Pappe, Karton, Pressspan oder Laminat handeln, beispielsweise in Form eines Streifens. Ein Laminat kann insbesondere mehrere verpresste Schichten aus Pappe, Karton und/oder Pressspan aufweisen. Besonders bevorzugt ist Wellpappe oder Wellboard und insbesondere in Form eines Wellpapp- oder Wellboardstreifens. Unter Wellboard sind dabei wellige Substrate aus Pressspan oder Laminaten zu verstehen. Das Material weist bevorzugt sehr gute Feuchtigkeitsabsorptionseigenschaften auf. Es ist aber auch möglich, ein welliges Substrat aus synthetischen Polymeren zu verwenden. Denkbar ist beispielsweise die Verwendung von Aramiden, z.B. Nomex®.

Bei Papp- und Kartonmaterialien sowie Pressspan handelt es sich um nachhaltige Materialien, die sich umweltschonend herstellen lassen.

Die Trägerplatte kann aus einem flexiblen Material gefertigt sein. Vorzugsweise ist die Trägerplatte aus einem zellulosebasiertem Material, beispielsweise Zellstoff, Holzschliff oder Altpapier, geformt. Dabei kann es sich um Pappe, Karton, Pressspan oder Laminat handeln. Ein Laminat kann insbesondere mehrere verpresste Schichten aus Pappe, Karton und/oder Pressspan aufweisen. Das Material weist bevorzugt sehr gute Feuchtigkeitsabsorptionseigenschaften auf. Es ist aber auch möglich, eine Trägerplatte aus synthetischen Polymeren zu verwenden. Denkbar ist beispielsweise die Verwendung von Aramiden, z.B. Nomex®.

Vorzugsweise weisen die Trägerplatte und das wellige Substrat Materialien mit ähnlichen oder gleichen Feuchtigkeitsabsorptionseigenschaften auf. Besonders bevorzugt sind Trägerplatte und Substrat aus dem gleichen Material gefertigt. Ganz besonders bevorzugt ist, wenn sowohl Trägerplatte als auch Substrat aus Pappe, Karton, Laminat oder Pressspan, insbesondere Isolierpressspan, gefertigt ist. Die Trägerplatte und das Substrat können als Isolationsmaterial, vorzugsweise in gewickelter Form, eingesetzt werden.

Das flexible Material ermöglicht ein breites Einsatzspektrum der Trägerplatte und des welligen Substrats. Beispielsweise ist es möglich, die Trägerplatte mit oder ohne Substrat zu wickeln oder auch nur leicht zu beugen. Die Materialien, wie vorhergehend beschrieben, eignen sich besonders für den Einsatz zur elektrischen Isolation im Hochspannungsbereich, insbesondere bei Hochspannungsgeräten mit Ölisolation.

Bevorzugt weist mindestens ein Abschnitt der Trägerplatte Befestigungslaschen zur Befestigung der Trägerplatte als Wickelanordnung auf, vorzugsweise ein mittlerer Abschnitt. Die Laschen in dem mittleren Abschnitt sind vorzugsweise als Zungen innerhalb der Grundfläche ausgebildet. Diese können beispielsweise durch Einschnitte in die Grundfläche hergestellt werden. Vorzugsweise sind die Zungen derart beweglich oder elastisch angeordnet, dass diese zumindest teilweise aus der Grundfläche heraus bewegbar sind. Vorzugsweise weisen der oder die mittleren Abschnitte vier Befestigungslaschen auf, von denen sich jeweils zwei paarweise gegenüberliegen. Es ist aber auch möglich, dass der oder die Abschnitte nur zwei sich gegenüberliegende Laschen aufweisen oder nur eine Lasche vorhanden ist. Gegenüberliegende Laschen sind bevorzugt. Die Laschen können aber auch durch Stanzen oder Perforierungen erzeugt werden, beispielsweise derart, dass eine Perforationslinie erst bei Verwendung gebrochen wird.

Die Enden der Trägerplatte, welche insbesondere jeweils durch eine der kürzeren Seitenkanten gebildet sein können, können ebenfalls Befestigungslaschen aufweisen. Die Befestigungslaschen können wie vorhergehend beschrieben ausgebildet sein. Bei den Befestigungslaschen kann es sich aber auch um Zungen handeln, die eine Verlängerung des jeweiligen Endabschnitts darstellen und/oder um Schlitze. Die Zungen können sich über die gesamte Breite des Endabschnitts erstrecken oder aber nur über einen Teil der Breite. Es kann sich dabei um eine oder mehrere Zungen handeln.

Bei einer Wickelanordnung der Trägerplatte können die Befestigungslaschen derart in das wellige Substrat einhaken, dass ein fester Wickel entsteht. Bevorzugt sind die Befestigungslaschen daher jeweils dazu ausgebildet, an einer Stirnseite des welligen Substrats anzuliegen. Dadurch werden keine weiteren Befestigungsmittel benötigt. Insbesondere haken sich gegenüberliegende Laschen bevorzugt ober- und unterhalb des welligen Substrats fest, so dass eine rutschfeste Anordnung entsteht.

Vorzugsweise ist die Trägerplatte aus einem Stück gefertigt. Die Auswölbungen können einfach in das Material geprägt oder gestanzt werden oder, beispielsweise bei der Verwendung von Kunststoff, durch Umformen eingefügt werden. Die Befestigungslaschen können beispielsweise durch Einschnitte in das Material, Stanzen oder Perforieren erzeugt werden.

Die einstückige Fertigung hat den Vorteil, dass sich die Trägerplatte sehr einfach in einem automatisierten Prozess fertigen lässt. Das Verfahren kann dadurch kostengünstig gestaltet werden.

Alternativ können die Laschen aufgeklebt oder andersweitig befestigt sein und die Trägerplatte somit aus mehreren Teilen gefertigt sein. Es ist auch denkbar, dass Nieten anstatt Laschen verwendet werden, so dass die Wickelanordnung mittels der Nieten fixierbar ist.

Vorzugsweise umfasst die Trägerplatte mindestens vier Abschnitte, zwei mittlere Abschnitte und zwei Endabschnitte. Die Abschnitte sind durch Auswölbungen, in diesem Fall drei Auswölbungen, voneinander getrennt. Die mittleren Abschnitte weisen vorzugsweise Befestigungslaschen in Form von Zungen auf, die durch Einschnitte in die Grundfläche herstellbar sind. Die Endabschnitte weisen vorzugsweise Zungen auf, die insbesondere als Verlängerung der Endabschnitte ausgebildet sein können. Grundsätzlich kann die Trägerplatte über weitere mittlere Abschnitte verfügen und nach Belieben verlängert werden. Jeder weitere Abschnitt ist durch eine weitere Auswölbung vom vorhergehenden Abschnitt getrennt. Besonders bevorzugt ist die Ausführung mit zwei mittleren Abschnitten, zwei Endabschnitten und drei Auswölbungen, da dies eine besonders wirtschaftliche Produktion ermöglicht.

Die Trägerplatte kann eine Länge zwischen 40 und 300 cm aufweisen, besonders zwischen 40 und 200 cm, besonders bevorzugt zwischen 50 cm und 80 cm und ganz besonders bevorzugt 60 cm. Es sind auch längere Trägerplatten möglich, beispielsweise 400 cm und länger. Eine besonders wirtschaftliche Produktion ergibt sich jedoch insbesondere für Längen bis 300 cm. Die Länge kann je nach Einsatz variieren.

Die Trägerplatte kann eine Breite zwischen 8 und 200 cm, bevorzugt zwischen 10 und 100 cm, weiter bevorzugt zwischen 15 und 80 cm und ganz besonders bevorzugt zwischen 15 und 40 cm aufweisen.

Trägerplatten der oben beschriebenen Masse haben den Vorteil, dass sie besonders wirtschaftlich hergestellt werden können und aus Platten mit Standardmassen mit einfachem Werkzeug herausgeprägt werden können ohne viel Überschussmaterial zu produzieren. Zudem haben sich diese Masse als besonders leicht handhabbar bei der Montage, insbesondere bei der Montage als Wickel, gezeigt. Die Variationen in der Grösse lassen es zudem zu, dass sowohl kleinere als auch grössere Bauteile umwickelt werden können.

Die Auswölbungen weisen bevorzugt eine Breite von 2 bis 4 cm, besonders bevorzugt von 2.5 bis 3 cm und ganz besonders bevorzugt von 2.6 bis 2.8 cm auf. Die Auswölbungen können in einem Abstand zwischen 10 und 40 cm, vorzugsweise zwischen 20 cm und 30 cm und besonders bevorzugt zwischen 24 und 26 cm beabstandet angeordnet sein.

Grundsätzlich können die Abstände an das verwendete wellige Substrat angepasst sein. Die Breite der Auswölbungen entspricht dabei bevorzugt dem Abstand von zwei aufeinanderfolgenden Wellen im Substrat. Das hat den Vorteil, dass die Auswölbung von zwei Wellen flankiert wird und so eine nahezu rutschfeste Anordnung bildet. Die Abstände zwischen den Auswölbungen sind insbesondere für Wicklungen auf Zylindern, wie sie in Barrieresystemen eines Transformators vorkommen können, geeignet. Die Zylinder haben üblicherweise einen Durchmesser zwischen 10 und 100 cm. Idealerweise sollte der Abstand zwischen zwei Auswölbungen mindestens so gross wie der Durchmesser des Zylinders sein, so dass mindestens 3 Auswölbungen auf einem ersten Umfang garantiert sein können. Eine solche Anordnung gibt eine besonders stabile und feste Anordnung im Wickel. Selbstverständlich sind diese Masse auch für Wicklungen in anderen Anwendungsbereichen geeignet.

Ein weiterer Aspekt der Erfindung betrifft ein Barrieresystem, insbesondere ein Barrieresystem für ein Hochspannungsgerät mit Ölisolation. Das Barrieresystem umfasst mindestens eine Trägerplatte wie vorhergehend beschrieben und ein welliges Substrat, vorzugsweise Wellpappe oder Wellboard, wobei das wellige Substrat an der Trägerplatte befestigt ist und die Trägerplatte mit dem welligen Substrat zu einem Wickel angeordnet ist.

Die Trägerplatte ist vorzugsweise wie vorhergehend beschrieben ausgeführt und umfasst eine im Wesentlichen rechteckige Grundfläche und Auswölbungen. Die Grundfläche ist in mindestens drei Abschnitte unterteilt und die Abschnitte sind durch die Auswölbungen voneinander getrennt. Die beiden äusseren Abschnitte bilden bevorzugt jeweils die Enden der Trägerplatte. Die Auswölbungen sind vorzugsweise wie vorhergehend beschrieben ausgebildet. Die Auswölbungen weisen gegenüberliegend angeordnete Schlitze auf, durch welche das wellige Substrat an der Trägerplatte fixiert ist.

Vorzugsweise umfasst das Barrieresystem zwei oder mehr Trägerplatten. Das wellige Substrat erstreckt sich dann bevorzugt über die mehreren Trägerplatten. Die Anordnung der Trägerplatten aneinander kann beispielsweise über Befestigungslaschen an den Endabschnitten der jeweiligen Trägerplatte erfolgen. Eine Befestigung ist jedoch nicht unbedingt nötig, falls die Trägerplatten alternativ über das fixierte wellige Substrat zusammengehalten werden.

Durch die Anordnung mehrerer Trägerplatten lässt sich das Barrieresystem beliebig verlängern und entsprechend der Verwendung anpassen. Durch die Unterbrüche zwischen den einzelnen Trägerplatten bleibt das System stabil und lässt sich über einen längeren Bereich wickeln.

Vorzugsweise ist das Barrieresystem als Wickel angeordnet mit vorzugsweise mindestens zwei Windungen. Aber auch eine einfache Wicklung ohne übereinander verlaufende Windungen ist möglich. Die Auswölbungen dienen neben der Fixierung des welligen Substrats zusätzlich als Abstandshalter. Dadurch werden die bisher üblichen Lamellenstreifen überflüssig. Zudem lässt sich dadurch im Barrieresystem Material und damit Gewicht einsparen. Die Lebensdauer des Barrieresystems wird erhöht.

Die Befestigungslaschen der mindestens einen Trägerplatte sind vorzugsweise wie vorhergehend beschrieben, ausgebildet. Die Laschen können im Wickel derart auf das wellige Substrat und insbesondere auf dessen Stirnseite aufliegen, dass der Wickel fixiert ist. Dazu sind insbesondere Befestigungslaschen in Form von Zungen, wie vorhergehend beschrieben, geeignet. Die Zungen können in den mittleren Abschnitten aus der Grundfläche derart herausgedrückt sein, dass diese auf dem welligen Substrat aufliegen können. Auf diese Art bleibt der Wickel fixiert und es werden keine weiteren Befestigungsmittel benötigt. Dies führt zu Material- und Kosteneinsparungen.

Das Barrieresystem kann weiter einen ersten, inneren Zylinder und einen zweiten, äusseren Zylinder umfassen. Die Zylinder weisen unterschiedliche Durchmesser auf. Der Wickel ist dabei bevorzugt zwischen dem ersten und dem zweiten Zylinder angeordnet. Der erste, innere Zylinder weist somit den kleineren Durchmesser auf und der zweite, äussere Zylinder den grösseren Durchmesser. Die Grösse der Zylinder richtet sich im Wesentlichen nach der Art des Barrieresystems. Üblich sind Zylinderdurchmesser zwischen 10 und 100 cm, aber auch grössere Durchmesser sind denkbar. Der Abstand der Zylinder wird vorzugsweise durch die Anzahl Windungen des Wickels bestimmt. Der Wickel ist bevorzugt in einem Anfangsbereich des ersten Zylinders dauerhaft fixiert, vorzugsweise verklebt. Die Verklebung kann in einem Bereich von 10 bis 50 cm erfolgen. Die Verklebung nimmt vorteilhaft maximal 1/3 der Fläche des ersten, inneren Zylinders ein, wobei die Verklebung vorzugsweise mindestens auf einem Bereich von 10 cm erfolgt.

Auf diese Weise lässt sich eine besonders feste Anordnung eines Barrieresystems erzielen. Das Barrieresystem ist besonders stabil gegenüber Krafteinwirkungen und Spannungen. Verklebungen können weitestgehend vermieden werden, so dass aus Klebungen resultierende Probleme reduziert oder gar vermieden werden könne.

Es ist auch möglich mehrere Zylinder, beispielsweise drei oder vier Zylinder, mit unterschiedlichem Durchmesser so anzuordnen, dass die einzelnen Zylinder untereinander mit je einem Wickel distanziert sind. Das Barrieresystem kann so optimal an das zu isolierende Bauteil angepasst werden.

Der Wickel kann an seinem äusseren Ende mit einem weiteren Fixierungsmittel fixiert sein. Bei der Fixierung kann es sich um eine Verklebung handeln. Das Fixierungsmittel kann aber auch in den Wickel gestanzt werden, so dass eine Art Niet im Wickel entsteht. Es ist auch denkbar, dass der Wickel mit Klebeband fixiert wird. Besonders bevorzugt ist die Fixierung mit einer Schnur, vorzugswiese einer Hanfschnur.

Das Verwenden einer Schnur, insbesondere Hanfschnur hat den Vorteil, dass die Materialeigenschaften mit denen der Trägerplatte, der Wellpappe und des Wellboards und der Zylinder vergleichbar sind. Insbesondere weisen die Materialien eine hohe Feuchtigkeitsabsorption auf, was sie besonders für den Einsatz als Barrieresystem in Öltransformatoren eignet.

Bevorzugt dient das Barrieresystem also zur elektrischen Isolation, insbesondere bevorzugt für ein Hochspannungsgerät mit Ölisolation. Grundsätzlich ist es aber auch denkbar, dass das Barrieresystem als Wärmedämmungssystem oder Schalldämmungssystem einsetzbar ist. Das Barrieresystem dient in diesem Fall zur Isolation im Sinne der Wärme- bzw. Schalldämmung.

### KURZE BESCHREIBUNG DER ZEICHNUNGEN

Bevorzugte Ausführungsformen der Erfindung werden im Folgenden anhand von Figuren näher beschrieben. Die Figuren dienen der Erläuterung und sind nicht einschränkend auszulegen. Es zeigen:
- Fig. 1: Ausgangsform zur Herstellung einer erfindungsgemässen Trägerplatte,
- Fig. 2: eine erfindungsgemässe Trägerplatte in einer perspektivischen Ansicht von schräg oben,
- Fig. 3: die Trägerplatte aus Figur 2 in einer perspektivischen Ansicht von schräg unten,
- Fig. 4: eine erfindungsgemässe Trägerplatte mit einem daran befestigten Wellboardstreifen,
- Fig. 5: der Übergang zwischen zwei benachbarten Trägerplatten,
- Fig. 6: ein erfindungsgemässes Barrieresystem, sowie
- Fig. 7: eine Detailaufnahme des erfindungsgemässen Barrieresystems zeigend die Befestigung mittels Laschen.

### BESCHREIBUNG BEVORZUGTER AUSFÜHRUNGSFORMEN

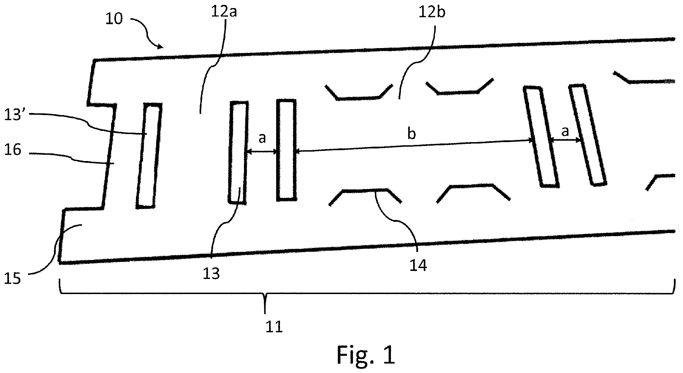

Figur 1 zeigt eine Ausgangsform 10 zur Herstellung einer erfindungsgemässen Trägerplatte. Die Ausgangsform 10 besteht aus einer ebenen und im Wesentlichen rechteckigen, das heisst bandförmigen, Pappe 11. Die Pappe 11 gliedert sich in unterschiedliche Abschnitte mit zwei verschiedenen Ausführungen 12a und 12b. In die Pappe 11 sind weiter Schlitze 13 gestanzt, wobei Schlitz 13' optional ist. Des Weiteren zeigt die Ausgangsform 10 Einschnitte 14 in Form trapezförmiger Schnitte. Zungen 15 an den Enden 16 (nur ein Ende gezeigt) bilden eine Verlängerung der Enden 16 der Ausgangsform 10.

Die Schlitze 13 in der Ausgangsform 10 weisen unterschiedliche Abstände a und b auf. Der Abstand a bildet später die Auswölbung. Abstand b zeigt den Abschnitt zwischen zwei benachbarten Auswölbungen und definiert einen mittleren Abschnitt 12b.

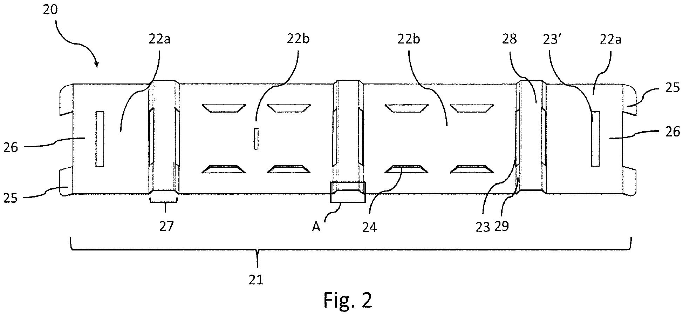

Figur 2 zeigt eine erfindungsgemässe Trägerplatte 20 in einer perspektivischen Ansicht von schräg oben. Die Trägerplatte 20, welche bevorzugt basierend auf der in der Figur 1 gezeigten Ausgangsform 10 hergestellt ist, verfügt über eine im Wesentlichen rechteckige Grundfläche 21. Die Grundfläche 21 unterteilt sich in vier Abschnitte mit unterschiedlicher Ausführung 22a und 22b. Die Abschnitte 22a bilden die Enden 26 der Trägerplatte 20. Die Abschnitte 22b bilden mittlere Abschnitte der Trägerplatte 20. Die Abschnitte 22a und 22b sind durch Auswölbungen 27 voneinander getrennt. Die Auswölbungen 27 erstrecken sich jeweils über die gesamte Länge der kürzeren Seitenkante der Grundfläche 21. Die Auswölbungen 27 umfassen jeweils zwei sich gegenüberliegende Schlitze 23, die jeweils in einer Seitenwand 29 der Auswölbung 27 angeordnet sind. Die Seitenwände 29 sind durch eine Deckfläche 28 begrenzt, die parallel zur Grundfläche 21 angeordnet ist. Die Auswölbungen zeigen mit ihren beiden Seitenwänden 29 und der dazwischen angeordneten Deckfläche 28 jeweils einen trapezförmigen Querschnitt A. Die mittleren Abschnitte 22b verfügen über Befestigungslaschen 24 in Form von trapezförmigen Einschnitten. An den Enden 26 der Trägerplatte 20 befinden sich weitere Laschen in Form von vorstehenden Zungen 25. Die in den Endabschnitten 22a jeweils vorhandenen Schlitze 23' sind optional.

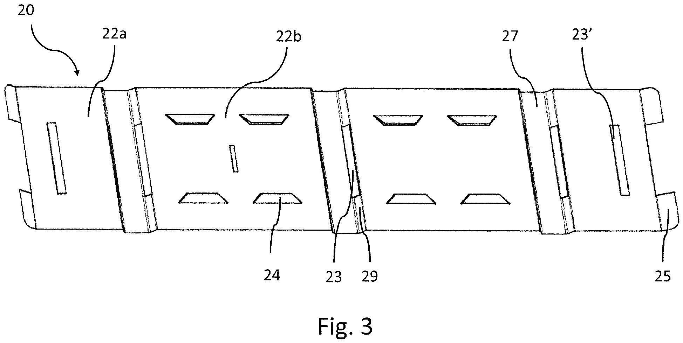

Figur 3 zeigt die Trägerplatte 20 aus Figur 2 von der Rückseite. Gleiche Bezugszeichen kennzeichnen gleiche Elemente.

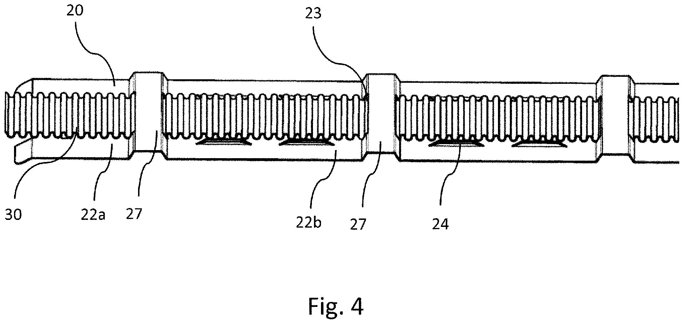

Figur 4 zeigt eine erfindungsgemässe Trägerplatte 20 mit einem daran angebrachten welligen Substrat in Form eines Wellboardstreifens 30. Der Wellboardstreifen 30 erstreckt durch die Schlitze 23 der Auswölbungen 27 in der Trägerplatte 20 hindurch.

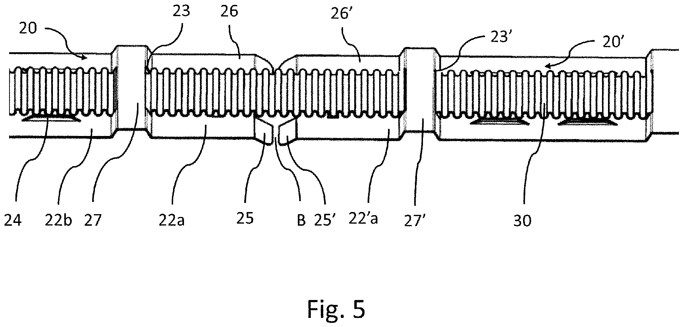

Figur 5 zeigt eine Anordnung mit zwei Trägerplatten 20 und 20' und einem Wellboardstreifen 30 und zeigt insbesondere den Übergang zwischen den beiden Trägerplatten 20 und 20'. Die beiden Trägerplatten 20 und 20' sind mit ihren Enden 26 und 26' einander zugewandt, so dass sich die Zungen 25 und 25' in einem Bereich B angrenzend zueinander gegenüberliegen. Der eine Wellboardstreifen 30 wird durch die Schlitze 23 in der Auswölbung 27 der Trägerplatte 20 über das Ende 26 zur Trägerplatte 20' und dort durch die Schlitze 23' der Auswölbung 27' der Trägerplatte 20' geführt. Im Wesentlichen lässt sich diese Anordnung beliebig verlängern, so dass eine Mehrzahl an Trägerplatten nebeneinander angeordnet werden kann. Der Wellboardstreifen 30 erstreckt sich dabei vorzugsweise einstückig über die gesamten Trägerplatten hinweg. Dadurch lässt sich eine besonders flexible und wickelbare Anordnung von Trägerplatten und Wellboard oder Wellpappe schaffen.

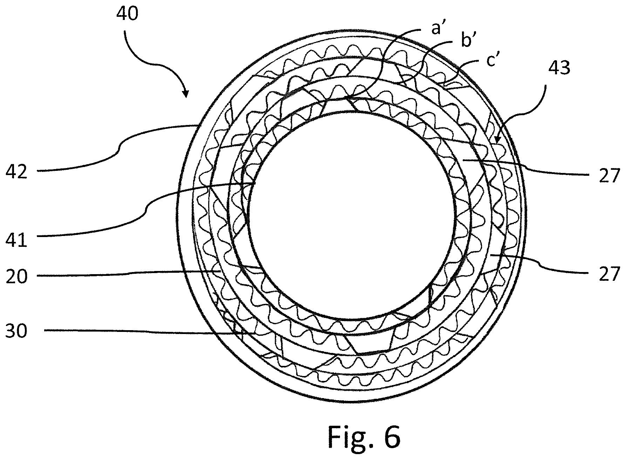

Figur 6 zeigt ein erfindungsgemässes Barrieresystem 40. Das Barrieresystem 40 umfasst einen ersten, inneren Zylinder 41 und einen zweiten, äusseren Zylinder 42. Mehrere Trägerplatten 20 sind zu einem Wickel 43 zwischen dem ersten Zylinder 41 und dem zweiten Zylinder 42 angeordnet. Durch die Auswölbungen 27 der Trägerplatten 20 ist Wellboard 30 geführt, wobei das Wellboard Teil des Wickels 43 bildet. Sowohl die Wellen des Wellboards 30 als auch die Auswölbungen 27 dienen als Abstandshalter zwischen den einzelnen Lagen a', b' und c' des Wickels 43 als auch als Abstandshalter zwischen der letzten Lage c' und dem äusseren Zylinder 42.

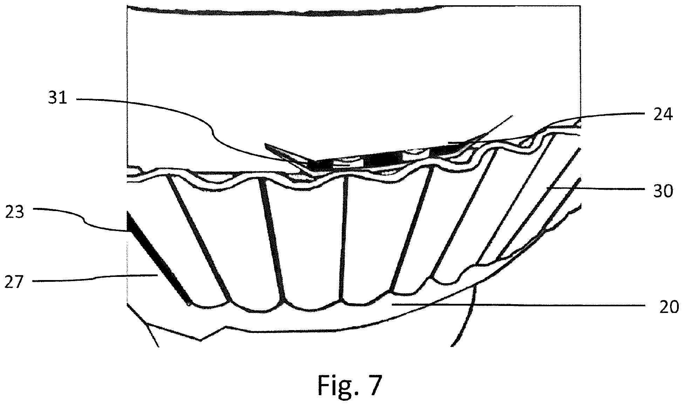

Figur 7 zeigt einen Ausschnitt aus dem erfindungsgemässen Barrieresystem und insbesondere zeigt Figur 7 eine mögliche Funktion der Befestigungslaschen 24 der Trägerplatte 20. Ein Wellboard 30 ist an der Trägerplatte 20 angeordnet und wird durch die Schlitze 23 in der Auswölbung 27 gehalten. Bei der Anordnung als Wickel dienen die Stirnseiten der Wellen 31 des Wellboards 30 als Auflage für die Befestigungslaschen 24, so dass der Wickel ohne weitere Hilfsmittel zusammengehalten wird und eine feste Anordnung bildet.

## Patentansprüche

1. Trägerplatte (20, 20') zum Befestigen eines welligen Substrats (30) umfassend eine im Wesentlichen rechteckige Grundfläche (21) und Auswölbungen (27), wobei die Grundfläche (21) in mindestens drei Abschnitte (22a, 22b, 22a) unterteilt ist und die Abschnitte (22a, 22b, 22a) durch die Auswölbungen (27) voneinander getrennt sind, **dadurch gekennzeichnet, dass** die Auswölbungen (27) jeweils
- zwei Seitenwände (29) und eine Deckfläche (28) aufweisen,
- wobei die Seitenwände (29) gegenüberliegend angeordnete Schlitze (23) zum Durchführen des welligen Substrats (30) aufweisen.

2. Trägerplatte (20, 20') nach Anspruch 1, wobei die Trägerplatte (20, 20') aus einem flexiblen Material, vorzugsweise Pappe, Karton oder Laminat, gefertigt ist.

3. Trägerplatte (20, 20') nach einem der vorherigen Ansprüche, wobei mindestens ein Abschnitt (22a, 22b), vorzugsweise ein mittlerer Abschnitt, (22b) Befestigungslaschen (24) zur Befestigung der Trägerplatte (20, 20') als Wickelanordnung (43) aufweist.

4. Trägerplatte (20, 20') nach einem der vorherigen Ansprüche, wobei die Trägerplatte (20, 20') einstückig ausgebildet ist.

5. Trägerplatte (20, 20') nach einem der vorherigen Ansprüche, wobei die Grundfläche (21) in mindestens vier Abschnitte (22a, 22b, 22b, 22a) unterteilt ist, welche durch die Auswölbungen (27) voneinander getrennt sind.

6. Trägerplatte (20, 20') nach einem der vorherigen Ansprüche, wobei die Trägerplatte (20, 20') eine Länge zwischen 40 und 300 cm aufweist, besonders zwischen 40 und 200 cm, besonders bevorzugt zwischen 50 cm und 80 cm und ganz besonders bevorzugt 60 cm.

7. Trägerplatte (20, 20') nach einem der vorherigen Ansprüche, wobei die Auswölbungen (27) eine Breite von 2 bis 4 cm, vorzugsweise 2.5 bis 3 cm und besonders bevorzugt 2.6 bis 2.8 cm aufweisen und in einem Abstand zwischen 10 und 40 cm, vorzugsweise zwischen 20 cm und 30 cm und besonders bevorzugt zwischen 24 und 26 cm beabstandet angeordnet sind.

8. Barrieresystem (40), insbesondere für ein Hochspannungsgerät mit Ölisolation, umfassend mindestens eine Trägerplatte (20) gemäss einem der Ansprüche 1 bis 7 und ein welliges Substrat, vorzugsweise Wellpappe (30) oder Wellboard, wobei das wellige Substrat an der Trägerplatte befestigt ist und die Trägerplatte mit dem welligen Substrat zu einem Wickel (43) angeordnet ist.

9. Barrieresystem (40) nach Anspruch 8 mit zwei oder mehr Trägerplatten (20, 20').

10. Barrieresystem (40) nach Anspruch 8 oder 9, wobei Befestigungslaschen (24) der mindestens einen Trägerplatte (20) derart auf dem welligen Substrat (30) aufliegen, dass der Wickel (43) fixiert ist.

11. Barrieresystem (40) nach einem der Ansprüche 8 bis 10 weiter umfassend einen inneren Zylinder (41) und einen äusseren Zylinder (42), wobei der Wickel (43) zwischen dem inneren (41) und dem äusseren Zylinder (42) angeordnet ist.

12. Barrieresystem (40) gemäss Anspruch 11, wobei der Wickel (43) in einem Anfangsbereich auf den inneren Zylinder (41) dauerhaft fixiert ist, vorzugsweise verklebt ist.

13. Barrieresystem (40) nach einem der Ansprüche 8 bis 12, wobei der Wickel (43) an seinem äusseren Ende mit einem Fixierungsmittel fixiert ist.

14. Barrieresystem (40) nach Anspruch 13, wobei das Fixierungsmittel eine Schnur, vorzugsweise eine Hanfschnur, ist.

15. Barrieresystem (40) nach einem der Ansprüche 8 bis 14, wobei das wellige Substrat (30) aus einem flexiblen Material, bevorzugt Pappe, Karton, Pressspan oder Laminat gefertigt ist und besonders bevorzugt Wellpappe oder Wellboard ist.
